(19) Europäisches Patentamt
European Patent Office
Office européen des brevets

(11) **EP 1 930 390 A1**

(12) **EUROPEAN PATENT APPLICATION**
published in accordance with Art. 153(4) EPC

(43) Date of publication:
**11.06.2008 Bulletin 2008/24**

(51) Int Cl.:
***C09K 3/00*** (2006.01)  ***C08F 2/26*** (2006.01)
***F16F 15/02*** (2006.01)

(21) Application number: **06796644.0**

(22) Date of filing: **22.08.2006**

(86) International application number:
**PCT/JP2006/316430**

(87) International publication number:
**WO 2007/023821 (01.03.2007 Gazette 2007/09)**

(84) Designated Contracting States:
**AT BE**

(30) Priority: **22.08.2005 JP 2005240489**

(71) Applicant: **Nippon Shokubai Co.,Ltd.**
**Osaka-shi, Osaka 541-0043 (JP)**

(72) Inventors:
• **MIYAWAKI, Yukihiro**
**Hyogo 6511301 (JP)**

• **NAGAISHI, Dai**
**Osaka 5640035 (JP)**

(74) Representative: **Brehm, Hans-Peter et al**
**Hansmann & Vogeser**
**Patent- und Rechtsanwälte**
**Leutstettener Straße 13**
**D-82319 Starnberg (DE)**

(54) **EMULSION FOR VIBRATION DAMPER**

(57)     To provide an emulsion for vibration damping materials: excellent in vibration damping property in a wide temperature range, drying property, and mechanical stability; and capable of improving skinning property of the coating film surface. An emulsion for vibration damping materials, comprising an emulsion produced using an anionic emulsifier, wherein the anionic emulsifier is at least one selected from the group consisting of polyoxyethylene alkyl ether sulfate ester salts, alkyl diphenyl ether disulfonates, and alkenyl disuccinates, and a use amount of the anionic emulsifier is 1.0 part or more relative to 100 parts by weight of a total amount of a monomer component used for producing the emulsion.

**EP 1 930 390 A1**

**Description**

TECHNICAL FIELD

The present invention relates to an emulsion for vibration damping materials. More preferably, the present invention relates to an emulsion for vibration damping materials useful as a raw material of vibration damping materials used to prevent vibration and noise of various structures, thereby to insure sustained quietude.

BACKGROUND ART

Vibration damping materials are used to prevent vibration and noise of various structures to insure sustained quietude and have been widely used beneath cabin floors of road vehicles and also applied to rolling stock, ships, aircraft, electric machines, buildings, and construction machines, among other uses. Molded products such as plate products and sheet products produced by using materials having vibration absorbing performance and sound absorbing performance have been conventionally used as raw materials used for such vibration damping materials. However, it is difficult for such molded products to be used at vibration or noise-generation positions having complicated shapes. Therefore, various methods for improving the workability and thereby sufficiently exhibiting the vibration damping property have been investigated. That is, an inorganic powder-containing asphalt sheet has been installed under automotive cabin flooring, for instance, but since the sheet must be secured in position by thermal fusion, improvements in workability and the like are needed and studies are underway on various compositions for vibration damping materials and polymers for the formation of vibration damping materials, for example.

Coating type vibration damping materials (coating materials) have been developed as an alternative material for such molded products. For example, the following vibration damping coating materials have been variously proposed: vibration damping coating materials are sprayed onto positions to be subjected to damping treatment with a spray or applied thereto by any methods, and thus-formed coating film can provide vibration absorbing effect and sound absorbing effect. Specifically, not only aqueous vibration damping coating materials in which synthetic resin powders are blended with vehicles such as asphalt, rubber, and synthetic resin and thereby the hardness of the obtained coating film is improved, but also as materials suitably used for interior parts of cars, vibration coating materials in which activated carbon as a filler is dispersed into a resin emulsion, have been developed. However, even these conventional products do not provide sufficiently satisfactory vibration damping performances. Techniques for further sufficiently exhibiting the vibration damping performances have been desired.

Coating films need to have a certain thickness for function as a vibration damping material. However, the coating films tend to dry from the surface. Thus, if a thick coating film dries, the surface coating film may be cured, although remaining moisture inside the films. Therefore, evaporation of the moisture inside the coating film causes expansion of the already-cured coating film near the surface to the outside or causes cracks on the coating film. In these cases, the coating film insufficiently exhibits properties as a vibration damping material. Therefore, significance of the coating film formation for use as a vibration damping material is lost. Particularly if an emulsion coating material is used to form a coating film, these problems are remarkably generated because the emulsion coating material tends to be fused immediately after moisture near the particles decreases, and then form a film. Therefore, a technique for producing an industrially useful vibration damping material by improving this respect has been desired.

With respect to a conventional raw material for vibration damping materials, Japanese Kokai Publication No. 2004-137485 (page 2) discloses a thickener for aqueous vibration damping materials containing a polymer having an alkali-soluble monomer unit and an associative monomer unit. Coating materials containing this thickener for aqueous vibration damping materials are excellent in drying property and can sufficiently prevent cracks or expansion generated on the surface, and thereby high-quality vibration damping materials excellent in vibration damping property can be provided. Therefore, such coating materials have been industrially useful. However, such a thickener for aqueous vibration damping materials has room for improvement in order to be more preferably used as a raw material for vibration damping materials of various structures by further improving the physical properties such as vibration damping property, drying property, and mechanical stability.

SUMMARY OF THE INVENTION

The present invention has been made in view of the above-mentioned state of the art. The present invention has an obj ect to provide an emulsion for vibration damping materials: excellent in vibration damping property in a wide temperature range, drying property, and mechanical stability; and capable of improving skinning property of the coating film surface.

The present inventors have made various investigations about emulsion for vibration damping materials. The inventors found that an emulsion produced using an anionic emulsifier shows effect of providing stability due to balance between a hydrophilic group and a hydrophobic group in the structure of the anionic emulsifier. The inventors further found that if the kind and the use amount of the anionic emulsifier are specified, an emulsion for vibration damping materials containing an emulsion with a large particle diameter to some extent can be produced. The inventors found that due to the above factors, the emulsion for vibration damping materials has dramatically improved mechanical stability and pigment dispersibility, and therefore the emulsion for vibration damping materials is excellent in vibration damping property in a wide temperature range and drying property, and can improve skinning property of the coating film surface as a vibration damping material. Therefore, the above-mentioned problems can be admirably solved. The inventors also found that such an emulsion for vibration damping materials is particularly useful as a raw material for vibration damping materials of various structures. The emulsion for vibration damping materials of the present invention can be particularly preferably used for aqueous coating type vibration damping materials.

That is, the present invention is an emulsion for vibration damping materials, comprising an emulsion produced using an anionic emulsifier, wherein the anionic emulsifier is at least one selected from the group consisting of polyoxyethylene alkyl ether sulfates, alkyl diphenyl ether disulfonates, and alkenyl disuccinates, and a use amount of the anionic emulsifier is 1.0 part or more relative to 100 parts by weight of a total amount of a monomer component used for producing the emulsion.

DETAILED DESCRIPTION OF THE INVENTION

The present invention is described in more detail below.

The emulsion for vibration damping materials of the present invention (also referred to as "emulsion for vibration damping materials (I)") contains an emulsion produced using an anionic emulsifier (also referred to as "emulsion (i)"). The emulsion may be produced using other emulsifiers such as nonionic emulsifiers in combination as long as the anionic emulsifier is used in the production. One or two or more species of the emulsions may be used. The emulsion may further contain other components unless the functional effects of the present invention are sacrificed.

In such an emulsion for vibration damping materials (I), it is preferable that the use amount of the anionic emulsifier is 1.0 part or more relative to 100 parts by weight of the total amount of the monomer component used for producing the emulsion (i). If the use amount of the anionic emulsifier is less than 1.0 parts by weight, the emulsion can not exhibit excellent drying property, and may be insufficient in pigment miscibility at the time of mixing with a pigment. Therefore, such an emulsion for vibration damping materials is not useful for vibration damping materials of various structures. The use amount of the anionic emulsifier is preferably 1.5 parts by weight and more preferably 2.0 parts by weight.

It is also preferable that the emulsion for vibration damping materials further comprises at least one anionic emulsifier selected from the group consisting of polyoxyethylene alkyl ether sulfates, alkyl diphenyl ether disulfonates, and alkenyl disuccinates, and a content of the anionic emulsifier is 1.0 part by weight or more relative to 100 parts by weight of a total amount of the monomer component used for producing the emulsion.

Thus, if the emulsion for vibration damping materials further contains a specific amount of a specific anionic emulsifier in addition to the emulsion produced using the anionic emulsifier, the emulsion for vibration damping materials of the present invention can more effectively exhibit the functional effects. The content of the anionic emulsifier in the emulsion for vibration damping materials is preferably 3.0 parts by weight and more preferably 4.0 parts by weight. The content thereof is also preferably 6.0 parts by weight or less in view of economic efficiency.

The amount of the anionic emulsifier consumed in reaction with the monomer component and the like at the production of the emulsion (i) is not included in the above-mentioned content of the anionic emulsifier. That is, the above-mentioned content of the anionic emulsifier means a content of free anionic emulsifier. The content of the free anionic emulsifier can be determined by the following method.

(Determination method of the content of the free anionic emulsifier)

Methanol 150 mL is added to the emulsion for vibration damping materials (I) 15 g and the mixture is stirred. Then, the mixed solution is centrifugalized in an ultra high-speed centrifuge at 80000 rpm for 20 minutes at a room temperature. It is determined that the emulsion for vibration damping materials (I) is divided into an upper layer (supernatant liquid) and a lower layer (resin precipitated layer) . Then, the upper supernatant liquid is extracted as fully as possible, and dried at 110°C for 2 hours. The residue was measure for weight. The component dissolved in the supernatant liquid (transparent) is considered as an emulsifier, and therefore the content of the emulsifier can be determined based on the weight of the residue.

The above-mentioned anionic emulsifier is preferably at least one selected from the group consisting of polyoxyethylene alkyl ether sulfates, alkyl diphenyl ether disulfonates, and alkenyl disuccinates. Among them, the above-mentioned anionic emulsifier is preferably at least one selected from the group consisting of polyoxyethylene alkyl ether sulfates and alkyl diphenyl ether disulfonates. Polyoxyethylene alkyl ether sulfates to which an ethylene oxide chain composed of 7 or more ethylene oxide units is added are particularly preferable as the polyoxyethylene alkyl ether sulfates. Thus, the preferable embodiments of the present invention include an embodiment in which the anionic emulsifier is at least one selected from the group consisting of polyoxyethylene alkyl ether sulfates to which an ethylene oxide chain composed of 7 or more ethylene oxide units is added and alkyl diphenyl ether disulfonates. Thereby, the emulsion for vibration damping materials can more sufficiently exhibit functional effects of the present invention. The hydrophobic group of the polyoxyethylene alkyl ether sulfates is not especially limited. Examples of the hydrophobic group include a lauryl group, an octyl phenyl group, a nonylphenyl group, a polycyclic phenyl group, a stearyl group, an oleyl group, a high alkyl group, a cetyl group, and a myristyl group. One or two or more species of them may be preferable.

The preferable use range of the above-mentioned anionic emulsifier is 2% or more and more preferably 2.5% or more.

Examples of particularly preferable compounds as the above-mentioned anionic emulsifier include NEWCOL 723SF (EO number of moles=23) (product of Nippon Nyukazai Co., Ltd.), LATEMUL E-118B (EO number of moles=20), LATEMUL E-150 (EO number of moles=50), PELEX SS-H (sodium alkyl diphenyl ether disulfonate) (tradename, products of Kao Corp.), NEWCOL 707SF, NEWCOL 707SF (EO number of moles=7, product of Nippon Nyukazai Co., Ltd.), NEWCOL 714SF (EO number of moles=14, product of Nippon Nyukazai Co., Ltd.), and Hitenol NF-08 (EO number of moles =8, product of DAI-ICHI KOGYO SEIYAKU CO., LTD.).

In the present invention, other conventionally used anionic emulsifiers may be used in combination with the above-mentioned at least one anionic emulsifier. Such anionic emulsifiers are not especially limited. Preferred examples thereof include alkyl sulfates such as sodium dodecyl sulfate, potassium dodecyl sulfate, and ammonium alkyl sulfate; sodium dodecyl polyglycol ether sulfate; sodium sulforicinoate; alkyl sulfonates such as sulfonated paraffin salt; alkyl sulfonates such as sodiumdodecylbenzene sulfonate and alkali metal sulfates of alkali phenol hydroxyethylene; higher alkylnaphthalenesulfonates; naphthalene sulfonate-formalin condensates; fatty acid salts such as sodium laurate, triethanolamine oleate, and triethanolamine abietate; polyoxyalkyl ether sulfates; polyoxyethylene carboxylic ester sulfates, polyoxyethylene phenyl ether sulfates; succinic acid dialkyl ester sulfonates; and polyoxyethylene alkyl aryl sulfates. One or two or more species of them may be preferably used.

Reactive emulsifiers are preferably used as the above-mentioned anionic emulsifier. Preferred examplesofsuch reactive emulsifiers include reactive anionic surfactants, sulfosuccinate reactive anionic surfactants, and alkenyl succinate reactive anionic surfactants. One or two or more species of them may be used.

LATEMUL S-120, S-120A, S-180 and S-180A (tradename, products of Kao Corp.), and ELEMINOL JS-2 (tradename, product of Sanyo Chemical Industries, Ltd.) are mentioned as commercial items of the sulfosuccinate reactive anionic surfactants. LATEMUL ASK (tradename, product of Kao Corp.) is mentioned as a commercial item of the alkenyl succinate reactive anionic surfactants.

The following surfactants serving as the reactive emulsifiers are preferably used as the above-mentioned anionic emulsifier. C3 to 5 aliphatic unsaturated carboxylic acid sulfoalkyl (containing 1 to 4 carbon atoms) ester surfactants, for example, (meth)acrylic acid sulfoalkyl ester salt surfactants such as 2-sulfoethyl (meth) acrylate sodium salt and 3-sulfopropyl (meth)acrylate ammonium salt; and aliphatic unsaturated dicarboxylic acid alkyl sulfoalkyl diester salt surfactants such as sulfopropylmaleic acid alkyl ester sodium salt, sulfopropylmaleic acid polyoxyethylene alkyl ester ammonium salt and sulfoethylfumaric acid polyoxyethylene alkyl ester ammonium salt; maleic acid dipolyethylene glycol ester alkylphenolether sulfates; phthalic acid dihydroxyethyl ester (meth)acrylate sulfates; 1-allyloxy-3-alkyl phenoxy-2-polyoxyethylene sulfates (tradename: ADEKA REASOAP SE-10N, product of ADEKA Corp.), polyoxyethylene alkylalkenylphenol sulfates (tradename: AQUALON, product of DAI-ICHI KOGYO SEIYAKU CO., LTD.), and ADEKA-REASOAP SR-10 (EO number of moles=10, product of ADEKA Corp.), SR-20 (EO number of moles=20, product of ADEKA Corp.), and SR-30 (EO number of moles=30, product of ADEKA Corp.).

As the reactive emulsifiers, $\alpha$-hydro-$\omega$-[2-(1-propenyl)-4-nonyl phenoxy] polyoxyethylene (tradename: AQUALON, product of DAI-ICHI KOGYO SEIYAKU CO. , LTD.) is preferable, for example, because the additional structure of ethylene oxide improves the stability to pigments, fillers, and the like.

The emulsion (i) in the above-mentioned emulsions for vibration damping materials (I) is not especially limited and conventionally used emulsions may be used. Emulsions containing one or two or more species of acrylic copolymers are preferable, for example.

Such acrylic copolymers generally exist in the form in which they are dispersed in a medium. That is, it is preferable that the above-mentioned emulsion (i) has a medium and acrylic copolymers dispersed in the medium. The medium is preferably an aqueous medium. Examples of such an aqueous medium include water and mixed solvents of water and a solvent capable of mixing with water. Among them, water is preferred in view of influence on environment or safety, which may be caused by use of a coating material containing the emulsion for vibration damping materials (I) of the present invention is coated.

The proportion of the above-mentioned acrylic copolymer is preferably 70% by weight or less, relative to 100% by weight of the total amount of the emulsion (i) . If the proportion is more than 70% by weight, the viscosity of the emulsion for vibration damping materials (I) becomes too high, and thereby, the emulsion (I) may not maintain sufficient dispersion stability and then aggregate. The proportion is more preferably 60% by weight or less.

In the present invention, the "acrylic copolymer" means a copolymer prepared by using at least two kinds of monomer components, and at least one kind of the monomer components is a monomer having an unsaturated double bond and a -COO group (hereinafter, also referred to as "(meth)acrylic acid (salt) monomer"). That is, the "acrylic copolymer" means a copolymer prepared by using at least two kinds of monomer components, wherein at least one kind of the monomer components is a monomer represented by $C(R^1)_2$=CH-COOR$^2$, or $C(R^3)_2$=C(CH$_3$)-COOR$^4$ ($R^1$, $R^2$, $R^3$, and $R^9$ being the same or different and each representing a hydrogen atom, a metal atom, an ammonium group, an organic amine group, or a straight, branched, or cyclic alkyl group.).

If two or more kinds of acrylic copolymers are used, these copolymers are different in any of various properties such as weight average molecular weight, glass transition temperature, SP value (solubility coefficient), kind of monomer to be used, and proportion of the monomer.

Examples of such a (meth)acrylic acid (salt) monomer include acrylic acid, methacrylic acid, crotonic acid, citraconic acid, itaconic acid, maleic acid, maleic anhydride, fumaric acid, methyl acrylate, methyl methacrylate, ethyl acrylate, ethyl methacrylate, propyl acrylate, propyl methacrylate, isopropyl acrylate, isopropyl methacrylate, butyl acrylate, butyl methacrylate, isobutyl acrylate, isobutyl methacrylate, tert-butyl acrylate, tert-butyl methacrylate, pentylacrylate, pentyl methacrylate, isoamyl acrylate, isoamyl methacrylate, hexyl acrylate, hexyl methacrylate, cyclohexyl acrylate, cyclohexyl methacrylate, octyl acrylate, octyl methacrylate, isooctyl acrylate, isooctyl methacrylate, nonyl acrylate, nonyl methacrylate, isononyl acrylate, isononyl methacrylate, decyl acrylate, decyl methacrylate, dodecyl acrylate, dodecyl methacrylate, tridecyl acrylate, tridecyl methacrylate, hexadecyl acrylate, hexadecyl methacrylate, octadecyl acrylate, octadecyl methacrylate, 2-ethylhexyl acrylate, 2-ethylhexyl methacrylate, vinyl formate, vinyl acetate, vinyl propionate, 2-hydroxyethyl acrylate, hydroxyethyl methacrylate, 2-hydroxypropyl acrylate, 2-hydroxypropyl methacrylate, diallyl phthalate, triallyl cyanurate, ethylene glycol diacrylate, ethylene glycol dimethacrylate, 1,4-butanediol diacrylate, 1,4-butanediol dimethacrylate, 1,6-hexanediol diacrylate, 1,6-hexanediol dimethacrylate, diethylene glycol diacrylate, diethylene glycol dimethacrylate, allyl acrylate, allyl methacrylate, and salts thereof or esterified products thereof. One or two or more species of them may be preferably used.

The above-mentioned salts are preferably metal salts, ammonium salts, organic amine salts, and the like. Examples of a metal atom forming the metal salts include monovalent metal atoms such as alkali metal atoms such as lithium, sodium, and potassium; divalent metal atoms such as alkaline earth metal atoms such as calcium and magnesium; and trivalent metal atoms such as aluminum and iron. Preferred examples of the organic amine salts include alkanolamine such as ethanolamine, diethanolamine, and triethanolamine, and triethylamines.

The proportion of the above-mentioned (meth) acrylic acid (salt) monomer is preferably 30 to 100% by weight, relative to 100% by weight of the total monomer component used for producing the acrylic copolymer, for example. The proportion is more preferably 50 to 100% by weight.

The above-mentioned monomer component may contain another monomer copolymerizable with the above-mentioned (meth) acrylic acid (salt) monomer. Examples of another monomer include divinylbenzene, styrene, α-methylstyrene, vinyltoluene, ethyl vinylbenzene, acrylonitrile, methacrylonitrile, acrylamide, methacrylamide, diacetone acrylamide, N-methylolacrylamide, and N-methylolmethacrylamide.

The proportion of the above-mentioned another monomer is preferably 70% by weight or less and more preferably 50% by weight or less, relative to 100% by weight of the total monomer component, for example.

It is preferable that the acrylic copolymer has a glass transition temperature (Tg) of -50 to 60°C. Thereby, higher vibration damping property can be exhibited in a wide temperature range, and particularly in a practical range of 20 to 60°C, the vibration damping property is more excellent.

The Tg of the acrylic copolymer may be determined based on already acquired knowledge, and also may be controlled by the kind or proportion of the monomer component. However, the Tg can be calculated through the following calculation formula, theoretically.

[Equation 1]

$$\frac{1}{Tg'} = \left[ \frac{W_1'}{T_1} + \frac{W_2'}{T_2} + \cdot \cdot \cdot + \frac{W_n'}{T_n} \right]$$

in the formula, Tg representing Tg of the acrylic copolymer (absolute temperature);
$W_1$, $W_2$, and ... $W_n$ each representing a mass fraction of each monomer to all the monomer component; and
$T_1$, $T_2$, and ... $T_n$ each representing a glass transition temperature (absolute temperature) of a homopolymer prepared by each monomer component.

If two or more acrylic copolymers are used as the above-mentioned acrylic copolymer, acrylic copolymers having different Tgs are preferably used. Such difference in glass transition temperature (Tg) makes it possible for the emulsion for vibration damping materials to exhibit higher vibration damping property in a wide temperature range. Particularly in a practical range of 20 to 60°C, the vibration damping property is dramatically improved. If three or more acrylic copolymers are used, at least two acrylic copolymers are different in Tg, and the rest one or more acrylic copolymer may have the same Tg as Tg of either of the two acrylic copolymers.

In the above-mentioned acrylic copolymers having different Tgs, the acrylic copolymer having a higher Tg is defined as "acrylic copolymer (A)", and the acrylic copolymer having a lower Tg is defined as "acrylic copolymer (B)". It is preferable that a difference in Tg between the copolymers (A) and (B) is 15°C or more. If the difference is less than 15°C, the vibration damping property may be insufficiently exhibited at either 20°C or 60°C. The difference is more preferably 20°C or more, and still more preferably 25°C or more. The vibration damping property within the practical range may be insufficient if the difference is too large. Therefore, the difference in Tg is preferably 100°C or less, and more preferably 90°C or less, and still more preferably 80°C or less.

Specifically, the glass transition temperature (TgA) of the above-mentioned acrylic copolymer (A) is preferably 0°C or more. Thereby, a vibration damping coating film formed by using a coating material containing the emulsion for vibration damping materials (I) of the present invention has more excellent drying property, and therefore expansion or cracks on the surface of the coating film can be more sufficiently suppressed. That is, a vibration damping material having dramatically excellent vibration damping property is formed. The glass transition temperature (TgA) of the acrylic copolymer (A) is more preferably 5°C or more.

The weight average molecular weight of the above-mentioned acrylic copolymer is preferably 20000 to 250000. If the weight average molecular weight is less than 20000, the vibration damping property is insufficient, and the obtained emulsion for vibration damping materials (I) can not exhibit excellent stability when mixed with coating materials. If the weight average molecular weight is more than 250000, the compatibility between the two or more acrylic copolymers is insufficient, and thereby the emulsion fails to maintain the balance of vibration damping property and also fails to improve the vibration damping property particularly in a range of 30 to 40°C. Also, such an emulsion may be insufficient in film-forming property at low temperatures when mixed with coating materials. The weight average molecular weight is more preferably 30000 to 220000, and still more preferably 40000 to 200000.

The weight average molecular weight can be measured by GPC (gel permeation chromatography) under the following measurement conditions.

Measurement apparatus: HLC-8120GPC (tradename, product of TOSOH CORP.)

Molecular weight column: serially connected TSK-GEL, GMHXL-L, and TSK-GELG5000HXL (products of TOSOH CORP.)

Eluent: Tetrahydrofuran (THF)

Standard substance for calibration curve: Polystyrene (product of TOSOH CORP.)

Measurement method: A measurement object is dissolved in THF such that the solids are about 0.2% by weight, and the mixture is filtered and the obtained substance as a measurement sample is measured for molecular weight.

If two or more acrylic copolymers are used as the above-mentioned acrylic copolymer, acrylic copolymers having different weight average molecular weights are preferably used. Such difference in weight average molecular weight makes it possible for the emulsion for vibration damping materials to exhibit higher vibration damping property in a wide temperature range. If three or more acrylic copolymers are used, at least two acrylic copolymers are different in weight average molecular weight, and the rest one or more acrylic copolymer may have the same weight average molecular weight as that of either of the two or more acrylic copolymers.

Specifically, the above-mentioned difference in weight average molecular weight is preferably 4000 or more and more preferably 10000 or more, and also preferably 200000 or less.

The average particle diameter of the above-mentioned emulsion (i) is not especially limited and preferably 10 nm to 1000 nm. If the average particle diameter is less than 10 nm, the emulsion fails to exhibit sufficient pigment dispersion property and then aggregates, or fails to improve mechanical stability sufficiently. If the average particle diameter is more than 1000 nm, such an emulsion is no longer an emulsion. The average particle diameter is more preferably 20 to 500 nm.

The average particle diameter can be measured by the following procedures, for example. The emulsion is diluted with distilled water and then sufficiently stirred and mixed. Then, about 10 mL of the mixture is charged into a glass cell and subjected to measurement using a dynamic light scattering photometer DLS-700 (product of OTSUKA ELECTRONICS CO., LTD.).

The pH of the above-mentioned emulsion (i) is not especially limited, and preferably 2 to 10, and more preferably 3 to 9, for example. The pH of the emulsion can be adjusted by adding ammonia water, water-soluble amines, alkali hydroxide aqueous solutions or the like, into the emulsion.

The viscosity of the above-mentioned emulsion (i) is not especially limited. The viscosity is preferably 10 to 10000 mPa·s, and more preferably 50 to 5000 mPa·s. The viscosity can be measured under 25°C and 20 rpm conditions with a B type rotational viscometer.

The form of the above-mentioned emulsion (i) is not especially limited. For example, the emulsion (i) preferably has a core-shell combined structure, a homogeneous structure, or a mixed structure formed from two or more emulsions.

The "core-shell combined structure" means an inhomogeneously formed structure having a core part formed from an acrylic copolymer and a shell part formed from an acrylic copolymer different from the acrylic copolymer forming the core part, in which the acrylic copolymers are not completely compatible with each other. The above-mentioned core-shell combined structure has a form in which the surface of the core part is covered with the shell part. It is preferable that the surface of the core part is perfectly covered with the shell part, in this case. However, the surface of the core part may not be perfectly covered. For example, the core-shell combined structure may have a form in which the surface of the core part is covered in a mesh-like state or a form in which the core part is not covered in some places.

The "homogeneous structure" means a structure formed from one acrylic copolymer, or if two or more acrylic copolymers are used, a structure in which the copolymers are perfectly compatible with each other.

Further, the "mixed structure formed from two or more emulsions" means a structure formed by mixing two or more emulsions prepared by two or more acrylic copolymers, respectively.

The above-mentioned emulsion (i) having a core-shell combined structure can be produced by multistage polymerization using a usual emulsion polymerization method. Specifically, it is preferable that such an emulsion is produced by emulsion polymerization of the monomer component in the aqueous medium, in the presence of a surfactant and/or a protective colloid, and then forming the shell part by further emulsion polymerization of the monomer component into the emulsion containing the core part.

The above-mentioned emulsion (i) having a homogeneous structure can be prepared by one-stage polymerization using a usual emulsion polymerization method. Specifically, it is preferable that such an emulsion is prepared by emulsion polymerization of the monomer component in the aqueous medium, in the presence of a surfactant and/or a protective colloid.

The above-mentioned emulsion (i) having a mixed structure can be produced by preparing each of two or more emulsions by one-stage polymerization using a usual emulsion polymerization method and then mixing these emulsions. Specifically, it is preferable that such an emulsion is produced by preparing each of two or more emulsions by emulsion polymerization of the monomer component in the aqueous medium, in the presence of a surfactant and/or a protective colloid, and then mixing these emulsions. The two or more emulsions may be mixed by a usual method.

The above-mentioned production method using the emulsion polymerization is described in more detail below.

The aqueous medium and the monomer component in the above-mentioned production method are as mentioned above.

The above-mentioned surfactant may be a surfactant generally used in the emulsion polymerization, and is not especially limited. Examples of such a surfactant include anionic surfactants, nonionic surfactants, cationic surfactants, amphoteric surfactants, polymer surfactants, and reactive surfactants. One or two or more species of them is/are preferably used.

The above-mentioned anionic surfactant is not especially limited. One or two or more species of the above-mentioned anionic emulsifier may be used.

The above-mentioned nonionic surfactant is not especially limited. Examples of the nonionic surfactant include polyoxyethylene alkyl ethers; polyoxyethylene alkylaryl ethers; sorbitan aliphatic esters; polyoxyethylene sorbitan aliphatic esters; aliphatic monoglycerides such as monolaurate of glycerol; polyoxyethylene-oxypropylene copolymer; condensates of ethylene oxide and aliphatic amines, aliphatic amides, or aliphatic acids. One or two or more species of them may be used.

The above-mentioned cationic surfactant is not especially limited. Examples of the cationic surfactant include dialkyl dimethyl ammonium salts, estertypedialkylammoniumsalts, amide type dialkyl ammonium salts, and dialkylimidazolium salts. One or two or more species of them may be used.

The above-mentioned amphoteric surfactant is not especially limited. Examples of the amphoteric surfactant include alkyl dimethylamino acetic acid betaine, alkyl dimethyl amine oxide, alkyl carboxy methyl hydroxyethyl imidazolinium betaine, alkyl amide propyl betaine, and alkyl hydroxy sulfobetaine. One or two or more species of them may be used.

The above-mentioned polymer surfactant is not especially limited. Examples of the polymer surfactant include polyvinyl alcohols and modified products thereof; (meth)acrylic acid water-soluble polymers; hydroxyethyl (meth)acrylic acid water-soluble polymers; hydroxypopyl (meth)acrylic acid water-soluble polymers; and polyvinyl pyrrolidone. One or two or more species of them may be used.

Among the above-mentioned surfactants, non-nonylphenyl type surfactants are preferably used in view of environment.

The use amount of the above-mentioned surfactant may be appropriately determined depending on the kind of the surfactant to be used or the kind of the monomer component to be used. For example, the use amount of the surfactant is preferably 0.3 to 10 parts by weight, and more preferably 0.5 to 5 parts by weight, relative to 100 parts by weight of the total amount of the monomer component used for preparing the acrylic copolymer.

Examples of the above-mentioned protective colloid include polyvinyl alcohols such as partially saponified polyvinyl alcohols, completely saponified polyvinyl alcohols, and modified polyvinyl alcohols; cellulose derivatives such as hydroxyethyl cellulose, hydroxypropylcellulose, and carboxymethylcellulose salt; natural polysaccharides such as Guar gum. One or two or more species of them may be used. Such a protective colloid may be used singly or in combination with the surfactant.

The use amount of the above-mentioned protective colloid may be appropriately determined depending on the use conditions and the like. For example, the use amount of the protective colloid is preferably 5 parts by weight or less, and more preferably 3 parts by weight or less, relative to 100 parts by weight of the total amount of the monomer component used for preparing the acrylic copolymer.

A polymerization initiator is preferably used in order to initiate the emulsion polymerization in the above-mentioned production method. The polymerization initiator is not especially limited as long as it is a substance which is decomposed by heating and generates radical molecules. Water-soluble initiators are preferably used. Examples of such an initiator include persulfates such as potassium persulfate, ammonium persulfate, and sodium persulfate; water-soluble azo compounds such as 2,2'-azobis(2-amidinopropane)dihydrochloride, and 4,4'-azobis(4-cyanopentanoic acid); thermal decomposition initiators such as hydrogen peroxide; redox polymerization initiators such as hydrogen peroxide and ascorbic acid, t-butyl hydroperoxide and rongalite, potassium persulfate and metal salt, and ammonium persulfate and sodium hydrogensulfite. One or two or more species of them may be used.

The use amount of the above-mentioned polymerization initiator is not especially limited and may be appropriately determined depending on the kind of the polymerization initiator and the like. For example, the use amount of the polymerization initiator is preferably 0.1 to 2 parts by weight and more preferably 0.2 to 1 part by weight, relative to 100 parts by weight of the total amount of the monomer component used for preparing the acrylic copolymer.

A reducing agent may be used in combination with the above-mentioned polymerization initiator, if necessary, in order to accelerate the emulsion polymerization. Examples of the reducing agent include reducing organic compounds such as ascorbic acid, tartaric acid, citric acid, and grape sugar; and reducing inorganic compounds such as sodium thiosulfate, sodium sulfite, sodium bisulfite, and sodium metabisulfite. One or two or more species of them may be used.

The use amount of the above-mentioned reducing agent is not especially limited and preferably 0.05 to 1 part by weight, relative to 100 parts by weight of the total amount of the monomer component used for preparing the acrylic copolymer, for example.

It is also preferable in the above-mentioned production method to use a chain transfer agent if necessary at the time of the emulsion polymerization in order to adjust the average molecular weight of the acrylic copolymer. The chain transfer agent may be a generally used chain transfer agent and is not especially limited. Examples of the chain transfer agent include alkyl mercaptans such as hexyl mercaptan, octyl mercaptan, n-dodecyl mercaptan, t-dodecyl mercaptan, n-hexadecyl mercaptan, and n-tetradecyl mercaptan; halogenated hydrocarbons such as carbon tetrachloride, carbon tetrabromide, and ethylene bromide; mercaptocarboxylic acid alkyl esters such as 2-ethylhexyl mercaptoacetate, 2-ethylhexyl mercaptopropionate, and tridecyl mercaptopropionate; mercaptocarboxylic acid alkoxyalkyl esters such as methoxybutyl mercaptoacetate and methoxybutyl mercaptopropionate; carboxylic acid mercaptoalkyl esters such as 2-mercaptoethyl octanoate; α-methylstyrene dimer, terpinolene, α-terpinene, γ-terpinene, dipentene, anisole, and allyl alcohol. One or two or more species of them may be used. Among them, it is preferable to use an alkylmercaptans such as hexylmercaptan, octylmercaptan, n-dodecylmercaptan, t-dodecylmercaptan, n-hexadecylmercaptan, and n-tetradecylmercatan.

The use amount of the above-mentioned chain transfer agent is not especially limited and preferably 2 parts by weight or less, and more preferably 1.0 part by weight or less, relative to 100 parts by weight of the total amount of the monomer component used for preparing the acrylic copolymer, for example.

Regarding the emulsion polymerization conditions in the above-mentioned production method, the polymerization temperature is not especially limited and preferably 0 to 100°C and more preferably 40 to 95°C, for example. The polymerization time is not especially limited, and preferably 1 to 15 hours, for example.

The addition mode of the monomer component, the polymerization initiator or the like is not especially limited. Any of enbloc addition, continuous addition, multistage addition and the like may be employed. These addition modes may be used in a suitable combination.

The emulsion for vibration damping materials (I) of the present invention can be produced by adding the anionic emulsifier to the emulsion (i). The addition timing of the anionic emulsifier is not especially limited. The anionic emulsifier may be added before, during, or after the production of the emulsion (i). The anionic emulsifier also may be added in two or more stages among the three stages of before, during, and after the production of the emulsion (i). Among them, it is preferable that the anionic emulsifier is added in the final stage of the production step of the emulsion (i). Thereby, the particle diameter of the emulsion for vibration damping materials (I) can be uniform. That is, no particles are additionally generated. Therefore, the emulsion for vibration damping materials (I) can be more excellent in mechanical stability and vibration damping property, and therefore, the drying property and the vibration damping property can be further improved. The "final stage of the production step of the emulsion (i)" means the time when emulsions having an average particle diameter of 10 to 1000 nm are produced and preferably the time when emulsions having an average particle diameter of 20 to 500 nm are produced.

A chain transfer agent is preferably used in the emulsion for vibration damping materials Examples of the above-mentioned chain transfer agent include alkyl mercaptans such as hexyl mercaptan, octylmercaptan, n-dodecyl mercaptan, t-dodecyl mercaptan, n-hexadecyl mercaptan, and n-tetradecyl mercaptan; halogenated hydrocarbons such as carbon tetrachloride, carbon tetrabromide, and ethylene bromide; mercaptocarboxylic acid alkyl esters such as 2-ethylhexyl mercaptoacetate, 2-ethylhexyl mercaptopropionate, and tridecyl mercaptopropionate; mercaptocarboxylic acid alkoxyalkyl esters such as methoxybutyl mercaptoacetate and methoxybutyl mercaptopropionate; carboxylic acid mercaptoalkyl esters such as 2-mercaptoethyl octanoate; $\alpha$-methylstyrene dimer, terpinolene, $\alpha$-terpinene, $\gamma$-terpinene, dipentene, anisole, and allyl alcohol. One or two or more species of themmay be used. Among them, it is preferable to use alkylmercaptans such as hexylmercaptan, octylmercaptan, n-dodecylmercaptan, t-dodecylmercaptan, n-hexadecylmercaptan, and n-tetradecylmercatan.

The present invention is also a vibration damping composition comprising the emulsion for vibration damping materials.

The emulsion for vibration damping materials of the present invention can constitute a vibration damping composition, if necessary, together with other components. Such a vibration damping composition essentially containing the emulsion for vibration damping materials of the present invention is also one of the preferable embodiments of the present invention. Such a composition can form an aqueous vibration damping material capable of exhibiting excellent thermal drying property and vibration damping property. The preferable embodiments of the present invention also include a use method of the emulsion for vibration damping materials, wherein the vibration damping composition is used as an aqueous vibration damping material.

The above-mentioned vibration damping composition preferably contains 40 to 90% by weight of solids relative to 100% by weight of the total amount of the vibration damping composition, and more preferably 50 to 83% by weight, and still more preferably 60 to 80% by weight. The pH of the vibration damping composition is preferably 7 to 11, and more preferably 7 to 9.

The mix amount of the emulsion for vibration damping materials (I) in the above-mentioned vibration damping composition is determined such that solids of the emulsion for vibration damping materials is 10 to 60% by weight relative to 100% by weight of the solids of the vibration damping composition. The proportion is more preferably 15 to 55% by weight.

Examples of the above-mentioned other components include solvent; plasticizer; stabilizer; thickener; wetting agent; antiseptic; foaming inhibitor; filler; coloring agent; dispersant; antirust pigment; antifoaming agent; antioxidant; mildewproofing agent; ultraviolet absorber; and antistatic agent. One or two or more species of them may be used. Among them, the vibration damping composition preferably contains a filler. The vibration damping composition also preferably contains a pigment (coloring agent or antirust pigment): The vibration damping composition containing the emulsion for vibration damping materials (I) of the present invention is particularly excellent in pigment dispersant, and therefore can exhibit this effect sufficiently if containing a pigment.

The above-mentioned other components can be mixed with the above-mentioned emulsion for vibration damping materials (I) and the like using, for example, a butterflymixer, a planetary mixer, a spiral mixer, kneader, and a Dissolver.

The above-mentioned other components may be those generally used and are not especially limited. The following compounds and the like may be used, for example.

Examples of the above-mentioned solvent include ethylene glycol, butyl cellosolve, butyl carbitol, and butyl carbitol acetate. The mix amount of the solvent may be appropriately determined such that the solids concentration of the emulsion for vibration damping materials (I) in the vibration damping composition is within the above-mentioned range.

Polyvinyl alcohols, cellulose derivatives, and polycarboxylic acid resins may be mentioned as the above-mentioned thickener, for example. The mix amount of the thickener is preferably, 0.01 to 2 parts by weight of solids, and more preferably 0.05 to 1.5 parts by weight, and still more preferably 0.1 to 1 part by weight, relative to 100 parts by weight of solids of the emulsion for vibration damping materials (I).

Examples of the above-mentioned filler include inorganic fillers such as calcium carbonate, kaolin, silica, talc, barium sulfate, alumina, iron oxide, titanium oxide, glass powders, magnesium carbonate, aluminum hydroxide, talc, kieselguhr, and clay; flaky inorganic fillers such as glass flakes and mica; and filamentous inorganic fillers such as metal oxide whiskers, glass fibers. The mix amount of the inorganic filler is preferably 50 to 700 parts by weight, relative to 100 parts by weight of solids of the emulsion for vibration damping materials (I), and more preferably 100 to 550 parts by weight.

Organic or inorganic coloring agents such as titanium oxide, carbon black, red iron oxide, Hansa yellow, benzine yellow, copper phthalocyanine blue, and quinacridone red may be mentioned as the above-mentioned coloring agent, for example.

Inorganic dispersants such as sodium hexametaphosphate and sodium tripolyphosphate and organic dispersants such as polycarboxylic acid dispersants may be mentioned as the above-mentioned dispersant, for example.

Metal salts of phosphoric acid, metal salts of molybdic acid, and metal salts of boric acid may be mentioned as the above-mentioned antirust pigment.

Silicone antifoaming agents may be mentioned as the above-mentioned antifoaming agent, for example.

A foaming agent may be used as the above-mentioned other components. In this case, it is preferable that the above-mentioned vibration damping composition is dried by heating to form a vibration damping coating film, as mentioned below. If the above-mentioned emulsion for vibration damping materials (I) further contains a foaming agent, the vibration damping material has a uniform foaming structure and becomes a thick film, and thereby sufficient thermal drying property or high vibration damping property is exhibited. Thus, the preferable embodiments of the present invention include a vibration damping composition containing the emulsion for vibration damping materials (I) of the present invention and a foaming agent.

Such a vibration damping composition may contain other components, if necessary.

The above-mentioned foaming agent is not especially limited. Low-boiling hydrocarbon-containing thermal expansion microcapsules, organic foaming agents, and inorganic foaming agents are preferable, for example. One or two or more species of them may be used. Examples of the thermal expansion microcapsules include Matsumoto Microsphere F-30, F-50 (products of Matsumoto Yushi-Seiyaku Co., Ltd.); and EXPANCEL WU642, WU551, WU461, DU551, DU401 (product of Japan Expancel Co., Ltd.). Examples of the organic foaming agent include azodicarbonamide, azobisisobutyronitrile, N,N-dinitrosopentamethylenetetramine, p-toluenesulfonylhydrazine, p-oxybis(benzenesulfohydrazide), and N,N-dinitroso. Examples of the inorganic foaming agent include sodium bicarbonate, ammonium carbonate, and silicon hydride.

The mix amount of the above-mentioned foaming agent is preferably 0.5 to 5.0 parts by weight relative to 100 parts by weight of the emulsion for vibration damping materials (I), and more preferably 1.0 to 3.0 parts by weight.

It is also preferable that the above-mentioned vibration damping composition further containing the foaming agent further contains an inorganic pigment, for example. Thereby, the above-mentioned thermal drying property and high vibration damping property can be sufficiently exhibited.

The above-mentioned inorganic pigment is not especially limited. One or two or more species of the above-mentioned inorganic coloring agents or inorganic antirust pigments may be used, for example.

The mix amount of the above-mentioned inorganic pigment is preferably 50 to 700 parts by weight, relative to 100 parts by weight of the emulsion for vibration damping materials (I), and more preferably 100 to 550 parts by weight, for example.

Polyvalent metal compounds may be used as the above-mentioned other components. In this case, the polyvalent metal compound improves the stability, dispersibility, thermal drying property of the vibration damping composition or the vibration damping property of the vibration damping material formed by the vibration damping composition. The polyvalent metal compounds are not especially limited. Examples of the polyvalent metal compounds include zinc oxide, zinc chloride, and zinc sulfate. One or two or more species of them may be used.

The form of the above-mentioned polyvalent metal compound is not especially limited, and may be in the form of a fine particle, an aqueous dispersion, an emulsified dispersion, or the like. Among them, the polyvalent metal compound is preferably used in the form of an aqueous dispersion or an emulsified dispersion, and more preferably in the form of an emulsified dispersion because the dispersibility in the vibration damping composition is improved. The use amount of the polyvalent metal compound is preferably 0.05 to 5.0 parts by weight, and more preferably 0.05 to 3.5 parts by weight, relative to 100 parts by weight of solids in the vibration damping composition.

The above-mentioned vibration damping composition is coated on a substrate and dried to give a coating film serving as a vibration damping material . The substrate is not especially limited. As the method of coating the substrate with the vibration damping composition, brush, spatula, air spray gun, airless spray gun, mortar gun, texture gun, and the like, may be used for coating.

The coating amount of the above-mentioned vibration damping composition may be appropriately determined depending on the intended application, expected performance, and the like. The vibration damping composition is preferably coated such that the coating film at the time of (after) drying has a face weight of 1.0 to 7.0 kg/m$^2$, and more preferably 2.0 to 6.0 kg/m$^2$. Use of the vibration damping composition of the present invention makes it possible to obtain a coating film which hardly generates expansion or cracks at the time of drying and hardly causes sagging on the vertical surface. The preferable embodiments of the present invention include a coating method of the vibration damping composition, wherein the vibration damping composition is coated so as to have a face weight of 2.0 to 6.0 kg/m$^2$ after drying, and dried. The preferable embodiments of the present invention also include a vibration damping material obtainable by the coating method of the vibration damping composition.

The above-mentioned vibration damping composition preferably contains 40 to 90% by weight of solids relative to 100% by weight of the total amount of the vibration damping composition, and more preferably 50 to 83% by weight, and still more preferably 60 to 80% by weight. The pH of the vibration damping composition is preferably 7 to 11, and more preferably 7 to 9.

The mix amount of the emulsion for vibration damping materials in the above-mentioned vibration damping composition is determined such that solids of the emulsion for vibration damping materials is 10 to 60% by weight relative to 100% by weight of the solids of the vibration damping composition. The proportion is more preferably 15 to 55% by weight.

Examples of the above-mentioned other components include solvent; aqueous cross-linking agent; plasticizer; stabilizer; thickener; wetting agent; antiseptic; foaming inhibitor; filler; coloring agent; dispersant; antirust pigment; antifoaming agent; antioxidant; mildewproofing agent; ultraviolet absorber; and antistatic agent. One or two or more species of them may be used. Among them, the vibration damping composition preferably contains a filler. The above-mentioned other components can be mixed with the above-mentioned emulsion for vibration damping materials and the like using, for example, a butterfly mixer, a planetary mixer, a spiral mixer, kneader, and a Dissolver.

The above-mentioned other components may be those generally used and are not especially limited. The following compounds and the like may be used, for example.

Examples of the above-mentioned solvent include ethylene glycol, butyl cellosolve, butyl carbitol, and butyl carbitol acetate. The mix amount of the solvent may be appropriately determined such that the solids concentration of the emulsion for vibration damping materials in the vibration damping composition is within the above-mentioned range.

Preferred examples of the above-mentioned aqueous cross-linking agent include oxazoline compounds such as EPOCROS WS-500, WS-700, K-2010, 2020, 2030 (tradename, products of NIPPON SHOKUBAI CO., LTD.); epoxy compounds such as ADEKA resin EMN-26-60, EM-101-50 (tradename, products of ADEKA Corp.); melamine compounds such as CYMEL C-325 (tradename, product of Mitsui Cytec Ind.; block isocyanate compounds; zinc oxide compounds such as AZO-50 (tradename, 50% by weight of zinc oxide aqueous dispersant, product of NIPPON SHOKUBAI CO., LTD.). The mix amount of the aqueous cross-linking agent is preferably 0.01 to 20 parts by weight of solids, relative to 100 parts by weigh of solids of the emulsion for vibration damping materials, for example. The mix amount is more preferably 0.15 to 15 parts by weight, and still more preferably 0.5 to 15 parts by weight. The aqueous cross-linking agent may be added into the emulsion for vibration damping materials or may be added together with other components added for forming the vibration damping composition.

If the cross-linking agent is mixed with the above-mentioned emulsion for vibration damping materials or the above-mentioned vibration damping composition, the toughness of the resin can be improved. Thereby, sufficiently high vibration damping property is exhibited in a high temperature range. Among them, oxazoline compounds are preferably used.

Polyvinyl alcohols, cellulose derivatives, and polycarboxylic acid resins may be mentioned as the above-mentioned thickener, for example. The mix amount of the thickener is preferably, 0.01 to 2 parts by weight of solids, and more preferably 0.05 to 1.5 parts by weight, and still more preferably 0.1 to 1 part by weight, relative to 100 parts by weight of solids of the emulsion for vibration damping materials.

Examples of the above-mentioned filler include inorganic fillers such as calcium carbonate, kaolin, silica, talc, barium sulfate, alumina, iron oxide, titanium oxide, glass powders, magnesium carbonate, aluminum hydroxide, talc, kieselguhr, and clay; flaky inorganic fillers such as glass flakes and mica; and filamentous inorganic fillers such as metal oxide whiskers, glass fibers. The mix amount of the inorganic filler is preferably 50 to 700 parts by weight, relative to 100 parts by weight of solids of the emulsion for vibration damping materials, and more preferably 100 to 550 parts by weight.

Organic or inorganic coloring agents such as titanium oxide, carbon black, red iron oxide, Hansa yellow, benzine yellow, copper phthalocyanine blue, and quinacridone redmaybe mentioned as the above-mentioned coloring agent, for example.

Inorganic dispersants such as sodium hexametaphosphate and sodium tripolyphosphate and organic dispersants such as polycarboxylic acid dispersants may be mentioned as the above-mentioned dispersant, for example.

Metal salts of phosphoric acid, metal salts of molybdic acid, and metal salts of boric acid may be mentioned as the above-mentioned antirust pigment.

Silicone antifoaming agents may be mentioned as the above-mentioned antifoaming agent, for example.

A foaming agent may be used as the above-mentioned other components. In this case, it is preferable that the above-mentioned vibration damping composition is dried by heating to form a vibration damping coating film, as mentioned below. If the above-mentioned emulsion for vibration damping materials further contains a foaming agent, the vibration damping material has a uniform foaming structure and becomes a thick film, and thereby sufficient thermal drying property or high vibration damping property is exhibited. Thus, the preferable embodiments of the present invention include a vibration damping composition containing the emulsion for vibration damping materials of the present invention and a foaming agent.

Such a vibration damping composition may contain other components, if necessary.

The above-mentioned foaming agent is not especially limited. Low-boiling hydrocarbon-containing thermal expansion microcapsules, organic foaming agents, and inorganic foaming agents are preferable, for example. One or two or more species of them may be used. Examples of the thermal expansion microcapsules include Matsumoto Microsphere F-30, F-50 (products of Matsumoto Yushi-Seiyaku Co., Ltd.); and EXPANCEL WU642, WU551, WU461, DU551, DU401 (product of Japan Expancel Co., Ltd.). Examples of the organic foaming agent include azodicarbonamide, azobisisobutyronitrile, N,N-dinitrosopentamethylenetetramine, p-toluenesulfonylhydrazine, p-oxybis(benzenesulfohydrazide), and N,N-dinitroso. Examples of the inorganic foaming agent include sodium bicarbonate, ammonium carbonate, and silicon hydride.

The mix amount of the above-mentioned foaming agent is preferably 0.5 to 5.0 parts by weight relative to 100 parts by weight of the emulsion for vibration damping materials, and more preferably 1.0 to 3.0 parts by weight.

It is also preferable that the above-mentioned vibration damping composition containing the emulsion for vibration damping materials and the foaming agent further contains an inorganic pigment, for example. Thereby, the above-mentioned thermal drying property and high vibration damping property can be sufficiently exhibited.

The above-mentioned inorganic pigment is not especially limited. One or two or more species of the above-mentioned inorganic coloring agents or inorganic antirust pigments may be used, for example.

The mix amount of the above-mentioned inorganic pigment is preferably 50 to 700 parts by weight, relative to 100 parts by weight of the emulsion for vibration damping materials, and more preferably 100 to 550 parts by weight, for example.

Polyvalent metal compounds may be used as the above-mentioned other components. In this case, the polyvalent metal compound improves the stability, dispersibility, thermal drying property of the vibration damping composition or the vibration damping property of the vibration damping material formed by the vibration damping composition. The polyvalent metal compounds are not especially limited. Examples of the polyvalent metal compounds include zinc oxide, zinc chloride, and zinc sulfate. One or two or more species of them may be used.

The form of the above-mentioned polyvalent metal compound is not especially limited, and may be in the form of a fine particle, an aqueous dispersion, an emulsified dispersion, or the like. Among them, the polyvalent metal compound is preferably used in the form of an aqueous dispersion or an emulsified dispersion, and more preferably in the form of an emulsified dispersion because the dispersibility in the vibration damping composition is improved. The use amount of the polyvalent metal compound is preferably 0.05 to 5.0 parts by weight, and more preferably 0.05 to 3.5 parts by weight, relative to 100 parts by weight of solids in the vibration damping composition.

Regarding the conditions to be used in the case where the above-mentioned vibration damping composition is coated on the substrate and dried to form a coating film, either drying by heating or drying at atmospheric temperature may be adopted. However, from efficiency points of view, drying by heating is preferred and preferably employed because the vibration damping composition of the present invention has excellent thermal drying property. The temperature of the drying by heating is preferably 80 to 210°C, and more preferably 110 to 180°C, and still more preferably 120 to 170°C.

The application of the vibration damping composition containing the emulsion for vibration damping materials (I) of the present invention is not especially limited. The vibration damping composition can exhibit excellent thermal drying property, vibration damping property and the like, and therefore can be preferably used in such applications as rolling stock, ships, aircraft, electric machines, buildings and construction machines, in addition to as automotive cabin floor base.

The emulsion for vibration damping materials (I) of the present invention has the above-mentioned configuration. The emulsion for vibration damping materials (I) is particularly useful as a raw material used in vibration damping materials of various structures because it is excellent in vibration damping property in a wide temperature range, drying property, and stability, and also it can improve skinning property of the coating film surface.

BEST MODE FOR CARRYING OUT THE INVENTION

The present invention is described in more detail with reference to Examples below, but the present invention is not limited to only these Examples. The terms, "part(s)" and "%" represent "part(s) by weight" and "% by weight", respectively, unless otherwise specified.

The weight average molecular weight (Mw), the glass transition temperature (Tg), and the viscosity in the following Examples and the like were determined by the above-mentioned procedures, respectively. The film turbidity of the film and the SP value were determined by the following procedures, respectively.

"Film turbidity"

The obtained emulsion was charged into a mold in 100.0 mm (length) x 50.0 mm (width) x 2.00 mm (height) and left for 10 minutes at a room temperature. Then, the emulsion was baked at 140°C to form a resin film. Thus-obtained resin film was visually observed for transparency.

"SP value"

The SP value was measured based on the following Small formula. In the formula, $\delta$ represents a SP value of the acrylic copolymer; $\Delta_{el}$ represents a calculated value (kcal/mol) of evaporation energy of each monomer component constituting the acrylic copolymer; $\Sigma\Delta_{el}$ represents a total value of the calculated values of all the monomer components constituting the acrylic copolymers; $\Delta V_m$ is a calculated value (ml/mol) of molecular volume of each monomer component constituting the acrylic copolymer; $\Sigma\Delta V_m$ is a total value of the calculated values of all the monomer components constituting the acrylic copolymer; and "x" is a molar distribution of each monomer component constituting the acrylic copolymer.

$$\delta = [ (\Sigma \Delta e_1)(x) / (\Sigma \Delta V_m)(x) ]^{0.5}$$

"Emulsion for vibration damping materials"

Example 1

A polymerization container equipped with a stirrer, a reflux condenser, a thermometer, a nitrogen gas inlet pipe and a dropping funnel was filled with deionized water (37.7 parts) . Then, under stirring in a nitrogen gas stream, the contents of the container were heated to an internal temperature of 70°C. The dropping funnel was filled with methyl methacrylate (14.6 parts), styrene (33.6 parts), 2-ethylhexylacrylate (22.5 parts), butylacrylate (25.3 parts), acrylic acid (1.0 part), methacrylic acid (3.0 parts), previously adjusted 20% aqueous solution of anionic emulsifier A (polyoxyethylene alkyl ether sulfate, tradename "Hitenol NF-08", product of DAI-ICHI KOGYO SEIYAKU CO., LTD.) (2 parts on solids equivalent basis relative to 100 parts of the total monomer component), and deionized water (10 parts). Thereby, a monomer emulsion was prepared.
This obtained monomer emulsion was added dropwise into the polymerization container adjusted to 70°C, and thereby the reaction was allowed to proceed. The temperature was raised to 75°C, and the monomer emulsion was uniformly added dropwise into the container over 3 hours while keeping the internal temperature at 75°C. At the same time, 5% aqueous solution of potassium persulfate (7.0 parts) and 2% aqueous solution of sodium hydrogensulfite (17.5 parts) were uniformly added dropwise into the container over 3 hours. Through such dropwise addition, an emulsion was formed. After completion of the dropwise addition, the reaction was continued for 1 hour at 75°C. Thereby, each of the monomer components was completely consumed. Then, the reaction solution was cooled at 25°C, and a proper amount of 25% ammonia water was added into the reaction solution. Thereby, an emulsion (1) was obtained. This obtained emulsion was defined as emulsion for vibration damping materials.
The obtained emulsion for vibration damping materials was determined for solids concentration, pH and viscosity. Table 1 shows these results.

Example 2

An emulsion for vibration damping materials was obtained in the same manner as in Example 1, except that a foaming agent ("EXPANCEL WU642", product of Japan Fillite Co. , Ltd.) 1 . 5 parts was further added to 100 parts of the emulsion.
This emulsion for vibration damping materials was evaluated for solids concentration, pH, and viscosity. Table 1 shows the results.

Example 3

A polymerization container equipped with a stirrer, a reflux condenser, a thermometer, a nitrogen gas inlet pipe and a dropping funnel was filled with deionized water (37.7 parts) . Then, under stirring in a nitrogen gas stream, the contents of the container were heated to an internal temperature of 70°C. The dropping funnel was filled with methyl methacrylate (14.6 parts), styrene (33.6 parts), 2-ethylhexyl acrylate (22. 5 parts), butyl acrylate (25.3 parts), acrylic acid (1.0 part), methacrylic acid (3.0 parts), previously adjusted 20% aqueous solution of anionic emulsifier A (polyoxyethylene alkyl ether sulfate, product of DAI-ICHI KOGYO SEIYAKU CO. , LTD. , tradename "Hitenol NF-08") (2 parts on solids equivalent basis relative to 100 parts of the total monomer component), and deionized water (10 parts) . Thereby, a monomer emulsion was prepared.
This obtained monomer emulsion was added dropwise into the polymerization container adjusted to 70°C, and thereby the reaction was allowed to proceed. The temperature was raised to 75°C, and the monomer emulsion was uniformly added dropwise into the container over 3 hours while keeping the internal temperature at 75°C. At the same time, 5% aqueous solution of potassium persulfate (7.0 parts) and 2% aqueous solution of sodium hydrogensulfite (17.5 parts) were uniformly added dropwise into the container over 3 hours. Through such dropwise addition, an emulsion was formed. After completion of the dropwise addition, the reaction was continued for 1 hour at 75°C. Thereby, each of the monomer components was completely consumed. Then, the reaction solution was cooled at 25°C, and a proper amount of 25% ammonia water was added into the reaction solution. Thereby, an emulsion (1) was obtained. To this obtained emulsion (1), anionic emulsifier B (tradename, "LATEMUL E-118B", Kao Corp.) 1 part relative to 100 parts of the total monomer component used for producing this emulsion (1) was added. Thereby, an emulsion for vibration damping materials was obtained.

This obtained emulsion for vibration damping materials was determined for solids concentration, pH, and viscosity. Table 1 shows the results.

Examples 4 to 8, and Comparative Example 1

Emulsions for vibration damping materials were produced in the same manner as in Example 1, except that the formulation of the monomer component, the kind of the anionic emulsifier, and the used amount thereof were changed as shown in Table 1.

Each of these emulsions for vibration damping materials were evaluated for solids concentration, pH, and viscosity, as performed in Example 1. Table 1 shows the results.

Example 9 and Comparative Example 2

Emulsions for vibration damping materials were produced in the same manner as in Example 1, except that the formulation of the monomer component, the kind of the anionic emulsifier, and the use amount thereof were changed as shown in Table 1, and a foaming agent ("EXPANCEL WU642", product of Japan Fillite Co. , Ltd.) 1. 5 parts was further added to 100 parts of the emulsion. Thereby, emulsions for vibration damping materials were obtained.

Each of these emulsions for vibration damping materials was evaluated for solids concentration, pH and viscosity, as performed in Table 1. Table 1 shows the results.

Examples 10 to 12

Emulsions for vibration damping materials were produced in the same manner as in Example 1, except that the formulation of the monomer component, the kind of the anionic emulsifier, and the use amount thereof were changed as shown in Table 1.

Each of these emulsions for vibration damping materials was evaluated for solids concentration, pH and viscosity, as performed in Table 1. Table 1 shows the results.

[Table 1]

| | | Examples | | | | | | | | | | | | Comparative Examples | |
|---|---|---|---|---|---|---|---|---|---|---|---|---|---|---|---|
| | | 1 | 2 | 3 | 4 | 5 | 6 | 7 | 8 | 9 | 10 | 11 | 12 | 1 | 2 |
| Anionic emulsifier (part) | A | 2 | 2 | 2 | 2 | 2 | 2 | 2 | 2 | 2 | 2 | 2 | 2 | — | — |
| | B | — | — | 1 | 2 | 3 | — | — | — | — | — | — | — | — | — |
| | C | — | — | — | — | — | 1 | 2 | 3 | 3 | — | — | — | — | — |
| | D | — | — | — | — | — | — | — | — | — | 1 | 2 | 3 | — | — |
| | E | — | — | — | — | — | — | — | — | — | — | — | — | 3.1 | 3.1 |
| Emulsion (part) | MMA | 14.6 | 14.6 | 14.6 | 14.6 | 14.6 | 14.6 | 14.6 | 14.6 | 14.6 | 14.6 | 14.6 | 14.6 | 14.6 | 14.6 |
| | St | 33.6 | 33.6 | 33.6 | 33.6 | 33.6 | 33.6 | 33.6 | 33.6 | 33.6 | 33.6 | 33.6 | 33.6 | 33.6 | 33.6 |
| | 2EHA | 22.5 | 22.5 | 22.5 | 22.5 | 22.5 | 22.5 | 22.5 | 22.5 | 22.5 | 22.5 | 22.5 | 22.5 | 22.5 | 22.5 |
| | BA | 25.3 | 25.3 | 25.3 | 25.3 | 25.3 | 25.3 | 25.3 | 25.3 | 25.3 | 25.3 | 25.3 | 25.3 | 25.3 | 25.3 |
| | AA | 1.0 | 1.0 | 1.0 | 1.0 | 1.0 | 1.0 | 1.0 | 1.0 | 1.0 | 1.0 | 1.0 | 1.0 | 1.0 | 1.0 |
| | MAA | 3.0 | 3.0 | 3.0 | 3.0 | 3.0 | 3.0 | 3.0 | 3.0 | 3.0 | 3.0 | 3.0 | 3.0 | 3.0 | 3.0 |
| Foaming agent (part/emulsion 100 parts) | | — | 1.5 | — | — | — | — | — | — | 1.5 | — | — | — | — | 1.5 |
| Properties of emulsion for vibration damping materials | Solids (% by weight) | 55.0 | 55.0 | 55.0 | 55.0 | 55.0 | 55.0 | 55.0 | 55.0 | 55.0 | 55.0 | 55.0 | 55.0 | 55.0 | 55.0 |
| | pH | 7.7 | 7.8 | 7.7 | 7.7 | 7.7 | 7.9 | 7.7 | 7.7 | 7.7 | 7.7 | 7.7 | 7.7 | 7.7 | 7.8 |
| | Viscosity (mPa·s) | 240 | 320 | 250 | 200 | 200 | 200 | 200 | 200 | 270 | 190 | 200 | 220 | 240 | 320 |
| Evaluation of coating material | Thermal drying property 1.5mm | Average | Good | Good | Good | Good | Good | Good | Good | Good | Good | Good | Good | Good | Good |
| | 3.0mm | Average | Good | Average | Average | Good | Average | Average | Good | Good | Average | Average | Good | Poor | Good |
| | 6.0mm | Average | Average | Average | Average | Average | Average | Average | Average | Good | Average | Average | Average | Poor | Poor |
| | Mechanical stability | Good | Good | Good | Excellent | Excellent | Good | Excellent | Excellent | Excellent | Good | Excellent | Excellent | Average | Average |

15

In Table 1, the used emulsifier A is a polymerization emulsifier "Hitenol NF-08"; the used emulsifier B is a post-addition anionic emulsifier "LATEMUL E-118B"; the used emulsifier C is a post-addition anionic emulsifier "PELEX SS-H"; and the used emulsifier D is a post-addition anionic emulsifier "NEWCOL 707SF". The used emulsifiers A to D in Table 2 are those mentioned above, respectively.

Example 13

A polymerization container equipped with a stirrer, a reflux condenser, a thermometer, a nitrogen gas inlet pipe and a dropping funnel was filled with deionized water (76 parts) . Then, under stirring in a nitrogen gas stream, the contents of the container were heated to an internal temperature of 70°C. The dropping funnel was filled with a monomer emulsion 1 composed of methyl methacrylate (24.3 parts), styrene (40.0 parts), 2-ethylhexyl acrylate (22.5 parts), butyl acrylate (12.2 parts) acrylic acid (1.0 part), t-dodecylmercaptone (0.8 parts), previously adjusted 20% aqueous solution of polyoxyethylene alkyl ether sulfate (product of DAI-ICHI KOGYO SEIYAKU CO. , LTD. , "Hitenol NF-08")(10 parts), and deionized water (10 parts).

The monomer emulsion 1 was added dropwise into the polymerization container adjusted to 70°C, and thereby the reaction was allowed to proceed. The temperature was raised to 80°C, and the monomer emulsion 1 was uniformly added dropwise into the container over 2 hours while keeping the internal temperature at 80°C. At the same time, 5% aqueous solution of potassium persulfate (7 parts) and 2% aqueous solution of sodium hydrogensulfite (17.5 parts) were uniformly added dropwise into the container over 2 hours. Through such dropwise addition, an emulsion forming a core part was formed. After completion of the dropwise addition, the reaction was continued for 1 hour at 75°C. Thereby, each of the monomer components was completely consumed.

Thus-obtained emulsion forming the core part was measured for weight average molecular weight and SP value. The glass transition temperature was determined based on the formulation of the monomers constituting the core part. Table 2 shows these results.

Then, in another dropping funnel, prepared was a monomer emulsion 2 composed of methyl methacrylate (27.4 parts), styrene (10.0 parts), 2-ethylhexyl acrylate (29.2 parts), butyl acrylate (32.5 parts), acrylic acid (1.0 part), t-dodecylmercaptan (0.6 parts), previously adjusted 20% aqueous solution of polyoxyethylene alkyl ether sulfate (product of DAI-ICH KOGYO SEIYAKU CO., LTD., "Hitenol NF-08") (10 parts), and deionized water (10 parts).

The prepared monomer emulsion 2 was added dropwise into the emulsion forming the core part and thereby the reaction was allowed to proceed. The monomer emulsion 2 was added dropwise over 2 hours while keeping the internal temperature at 80°C. At the same time, 5% aqueous solution of potassium persulfate (7 parts) and 2% aqueous solution of sodium hydrogensulfite (17.5 parts) were uniformly added dropwise into the mixture over 2 hours. Through such dropwise addition, a shell part was formed to obtain a core-shell type particle. After completion of the dropwise addition, the reaction was continued for 1 hour at 75°C. Thereby, each of the monomers was completely consumed. Then, the reaction solution was cooled at 25°C, and a proper amount of 25% ammonia water was added into the reaction solution. Thereby, an aqueous emulsion for vibration damping materials (13) was obtained. The SP value of the shell part in this emulsion (13) was determined, and the glass transition temperature was measured based on the formulation of the monomers constituting the shell part.

The obtained emulsion for vibration damping materials (13) was determined for weight average molecular weight (the whole molecular weight), solids concentration, pH and viscosity. And the white turbidity of the film was evaluated by visual observation. Table 2 shows these results.

Example 14

An emulsion for vibration damping materials was obtained in the same manner as in Example 13, except that the formulation of the monomer component used for forming the core part and the shell part was changes as shown in Table 2 and a foaming agent ("EXPANCEL WU642", product of Japan Fillite Co., Ltd.) 1. 5 parts was further added to 100 parts of the emulsion containing a core-shell type particle.

This emulsion for vibration damping materials was evaluated for various properties, and the like, as performed in Example 13. Table 2 shows the results.

Example 15

A polymerization container equipped with a stirrer, a reflux condenser, a thermometer, a nitrogen gas inlet pipe and a dropping funnel was filled with deionized water (76 parts). Then, under stirring in a nitrogen gas stream, the contents of the container were heated to an internal temperature of 70°C. The dropping funnel was filled with a monomer emulsion 1 composed of methyl methacrylate (24.3 parts), styrene (40.0 parts), 2-ethylhexyl acrylate (22. 5 parts), butyl acrylate (12.2 parts) acrylic acid (1.0 part), t-dodecylmercaptone (0.8 parts), previously adjusted 20% aqueous solution of polyoxyethylene alkyl ether sulfate (product of DAI-ICHI KOGYO SEIYAKU CO. , LTD. , "Hitenol NF-08")(10 parts), and deionized water (10 parts).

The monomer emulsion 1 was added dropwise into the polymerization container adjusted to 70°C, and thereby the reaction was allowed to proceed. The temperature was raised to 80°C, and the monomer emulsion 1 was uniformly added dropwise into the container over 2 hours while keeping the internal temperature at 80°C. At the same time, 5% aqueous solution of potassium persulfate (7 parts) and 2% aqueous solution of sodium hydrogensulfite (17.5 parts) were uniformly added dropwise into the container over 2 hours. Through such dropwise addition, an emulsion forming a core part was formed. After completion of the dropwise addition, the reaction was continued for 1 hour at 75°C. Thereby, each of the monomer components was completely consumed.

Thus-obtained emulsion forming the core part was measured for weight average molecular weight and SP value. The glass transition temperature was determined based on the formulation of the monomers constituting the core part. Table 2 shows these results.

Then, in another dropping funnel, prepared was a monomer emulsion 2 composed of methyl methacrylate (27. 4 parts), styrene (10.0 parts), 2-ethylhexyl acrylate (29.2 parts), butyl acrylate (32.5 parts), acrylic acid (1.0 part), t-dodecylmercaptan (0.6 parts), previously adjusted 20% aqueous solution of polyoxyethylene alkyl ether sulfate (product of DAI-ICH KOGYO SEIYAKU CO., LTD., "Hitenol NF-08") (10 parts), and deionized water (10 parts).

The prepared monomer emulsion 2 was added dropwise into the emulsion forming the core part and thereby the reaction was allowed to proceed. The monomer emulsion 2 was added dropwise over 2 hours while keeping the internal temperature at 80°C. At the same time, 5% aqueous solution of potassium persulfate (7 parts) and 2% aqueous solution of sodium hydrogensulfite (17.5 parts) were uniformly added dropwise into the mixture over 2 hours. Through such dropwise addition, a shell part was formed to obtain a core-shell type particle. After completion of the dropwise addition, the reaction was continued for 1 hour at 75°C. Thereby, each of the monomers was completely consumed. Then, the reaction solution was cooled at 25°C, and a proper amount of 25% ammonia water was added into the reaction solution. Thereby, an aqueous emulsion for vibration damping materials (15) was obtained. The SP value of the shell part in this emulsion (15) was determined, and the glass transition temperature was measured based on the formulation of the monomers constituting the shell part.

To this obtained emulsion (15), the anionic emulsifier (tradename, "LATEMUL E-118B", Kao Corp.) 1 part relative to 100 parts of the total monomer component used for producing this emulsion (15) was added. Thereby, an emulsion for vibration damping materials was obtained.

This obtained emulsion for vibration damping materials was determined for weight average molecular weight (the whole molecular weight), solids concentration, pH, and viscosity. And the white turbidity of the film was evaluated by visual observation. Table 2 shows the results.

Examples 16, Comparative Examples 3 and 4

Emulsions for vibration damping materials were obtained in the same manner as in Example 15, except that the formulation of the monomer component used for forming the core part and the shell part was changes as shown in Table 2 and in Example 16 and Comparative Example 4, a foaming agent ("EXPANCEL WU642", product of Japan Fillite Co., Ltd.) 1. 5 parts was further added to 100 parts of the emulsion containing a core-shell type particle.

These emulsions for vibration damping materials were evaluated for various properties, and the like, as performed in Example 15. Table 2 shows the results.

[Table 2]

| | | Examples | | | | | Comparative Examples | |
|---|---|---|---|---|---|---|---|---|
| | | 13 | 14 | 15 | 16 | 17 | 3 | 4 |
| Kind of emulsifier | A | 20 | 20 | 20 | 20 | 20 | - | - |
| | B | - | - | 2 | 2 | - | - | - |
| | D | - | - | - | | 2 | - | - |
| | E | - | - | - | - | - | 3.1 | 3.1 |
| Core part (A) (part) | MMA | 24.3 | 24.3 | 24.3 | 24.3 | 24.3 | 24.3 | 24.3 |
| | St | 40.0 | 40.0 | 40.0 | 40.0 | 40.0 | 40.0 | 40.0 |
| | 2EHA | 22.5 | 22.5 | 22.5 | 22.5 | 22.5 | 22.5 | 22.5 |
| | BA | 12.2 | 12.2 | 12.2 | 12.2 | 12.2 | 12.2 | 12.2 |
| | AA | 1.0 | 1.0 | 1.0 | 1.0 | 1.0 | 1.0 | 1.0 |
| | t-DM | 0.8 | 0.8 | 0.8 | 0.8 | 0.8 | 0.8 | 0.8 |
| | Molecular weight (Mw) | 25000 | 25000 | 25000 | 25000 | 25000 | 25000 | 25000 |
| | S P value | 8.42 | 8.42 | 8.42 | 8.42 | 8.42 | 8.42 | 8.42 |
| Shell part (B) (part) | MMA | 27.4 | 27.4 | 27.4 | 27.4 | 27.4 | 27.4 | 27.4 |
| | St | 10.0 | 10.0 | 10.0 | 10.0 | 10.0 | 10.0 | 10.0 |
| | 2EHA | 29.2 | 29.2 | 29.2 | 29.2 | 29.2 | 29.2 | 29.2 |
| | BA | 32.5 | 32.5 | 32.5 | 32.5 | 32.5 | 32.5 | 32.5 |
| | AA | 1.0 | 1.0 | 1.0 | 1.0 | 1.0 | 1.0 | 1.0 |
| | t-DM | 0.6 | 0.6 | 0.6 | 0.6 | 0.6 | 0.6 | 0.6 |
| | S P value | 9.29 | 9.29 | 9.29 | 9.29 | 9.29 | 9.29 | 9.29 |
| Foaming agent (part/Em 100 parts) | | - | 1.5 | - | 1.5 | - | - | 1.5 |
| The whole molecular weight (Mw) | | 41000 | 41000 | 41000 | 41000 | 41000 | 41000 | 41000 |
| TqA/TqB(°C) | | 20/-20 | 20/-20 | 20/-20 | 20/-20 | 20/-20 | 20/-20 | 20/-20 |
| Ratio of WA/WB | | 50/50 | 50/50 | 50/50 | 50/50 | 50/50 | 50/50 | 50/50 |
| △ SP(B-A) | | 0.87 | 0.87 | 0.87 | 0.87 | 0.87 | 0.87 | 0.87 |

(continued)

| | | | Examples | | | | | Comparative Examples | |
|---|---|---|---|---|---|---|---|---|---|
| | | | 13 | 14 | 15 | 16 | 17 | 3 | 4 |
| Emulsion properties | Solids (% by weight) | | 55.0 | 55.0 | 55.0 | 55.0 | 55.0 | 55.0 | 55.0 |
| | pH | | 7.7 | 7.7 | 7.7 | 7.7 | 7.7 | 7.7 | 7.7 |
| | Viscosity (mPa ·s) | | 300 | 300 | 270 | 270 | 300 | 300 | 300 |
| | Film turbidity | | Transparent | Trans parent | Transparent | Transparent | Trans parent | Trans parent | Transparent |
| Evaluation of coating material | Thermal drying property | 1.5mm | Good | Good | Good | Good | Good | Good | Good |
| | | 3.0mm | Average | Good | Good | Good | Good | Average | Good |
| | | 6.0mm | Average | Average | Good | Good | Good | Poor | Average |
| | Mechanical stability | | Good | Good | Excellent | Excellent | Excellent | Average | Average |

[Table 3]

| | | Face weight (kg/m$^2$) | | | | |
|---|---|---|---|---|---|---|
| | | 1.0 | 2.0 | 4.0 | 6.0 | 7.5 |
| Thermal drying property | Example 5 | Good | Good | Good | Average | Average |
| | Exampte9 | Good | Good | Good | Good | Average |

Descriptions in Tables 1 and 2 are as follows.

Anionic emulsifier A: polymerization emulsifier "Hitenol NF-08" (tradename, product of DAI-ICHI KOGYO SEIYAKU CO., LTD.)

Anionic emulsifier B: post-addition anionic emulsifier, "LATEMUL E-118B" (tradename, product of Kao Corp.)

Anionic emulsifier C: post-addition anionic emulsifier, "PELEX SS-H" (tradename, product of Kao Corp.)

MMA: methyl methacrylate

St: styrene

2EHA: 2-ethylhexyl acrylate

BA: butyl acrylate

AA: acrylic acid

MAA: methacrylic acid

t-DM: t-dodecylmercaptan

TgA/TgB (°C): glass transition temperature (°C) of the core part (A)/glass transition temperature (°C) of the shell part (B) Ratio of WA/WB: ratio by weight (%/%) of the core part (A) to the shell part (B)

ΔSP (B-A) : value calculated by subtracting the SP value of the core part (A) from the SP value of the shell part (B)

As ΔSP (B-A) becomes small, the compatibility becomes relatively more excellent. On the other hand, the compatibility becomes relatively more poor as ΔSP (B-A) becomes larger.

"Vibration damping composition"

The emulsions for vibration damping material obtained in Examples 1 to 17 and Comparative Examples 1 to 4 were mixed as follows to form vibration damping compositions. The vibration damping compositions were evaluated for thermal drying property and mechanical stability. Tables 1 and 2 show the results. The emulsion for vibration damping materials obtained in Example 1 to 7, or Comparative Examples 1 to 2: 100 parts

Calcium carbonate ("NN#200", product of NITTO FUNKA KOGYO K. K. , filler): 250 parts

Dispersant ("DEMOL EP", product of Kao Corp., special polycarboxylic acid polymer surfactant): 1 part

Thickener ("ACRYSET AT-2", product of NIPPON SHOKUBAI Co. , Ltd. , alkali soluble acrylic thickener): 2 parts

Antifoaming agent ("NOPCO 8034L", product of SAN NOPCO Ltd., antifoaming agent, main component: hydrophobic silicon + mineral oil): 0.3 parts

"Thermal drying property"

The above-mentioned vibration damping composition was charged into a mold in 1.5 mm x 4.0 mm x 6. 0 mm and thereby coated on a cold rolling steel plate (SPCC: 15 (width) x 250 (length) x 0.8 mm(thickness)). Then, the coated composition was dried for 30 minutes at 150°C. After drying, the state of the coating film was observed, and the coating film was evaluated for drying property based on the following standard.

Using the above-mentioned vibration damping compositions in Examples 5 and 9, each of the vibration damping compositions was coated on a cold rolling steel plate (SPCC: 15 (width) x 250 (length) x 0.8 mm (thickness)) such that the coating film after drying has a face weight of 1.0 to 7.5 kg/m$^2$. The coated composition was dried for 30 minutes at 150°C. After drying, the state of the coating film was observed, and the coating film was evaluated for drying property based on the following standard. Table 3 shows the results. The evaluation results show that the films having a small face weight and a thinner thickness were more excellent in thermal drying property. In Example 9, the vibration damping composition exhibited excellent thermal drying property in a face weight of 6.0 kg/m$^2$, because the composition contained the foaming agent.

Good: No blister

Average: Several blisters are observed on the surface.

Poor: Many blisters are generated on the surface and big round blisters are observed.

"Mechanical stability"

Pure water 30 g was added to the above-mentioned vibration damping composition 100 g and the mixture was stirred and mixed enough. The mixture was filtered through a 100 metal mesh. Then, the filtered mixture 70 g was subjected to mechanical stability test using Maron stability tester (produced by KUMAGAI RIKI KOGYO CO., LTD.) (according to JIS K6828:1996, platform scale 10 kg, disk rotation frequency 1000 rpm, rotation time 5 minutes, test temperature 25°C). After the test, the vibration damping composition was filtered through a 100 metal mesh, and dried for 1 hour at 110°C in a drying oven. The evaluation after the test was performed based on the following formula.

```
Aggregation ratio (%) =(mass of metal mesh after drying (g) -
mass of metal mesh before drying (g)/50 g x 100
```

Excellent: less than 0.1%
Good: 0.1% or more and less than 0.5%
Average: 0.5% or more and less than 1.0%
Poor: 1.0% or more

**Claims**

1. An emulsion for vibration damping materials, comprising an emulsion produced using an anionic emulsifier, wherein the anionic emulsifier is at least one selected from the group consisting of polyoxyethylene alkyl ether sulfates, alkyl diphenyl ether disulfonates, and alkenyl disuccinates, and a use amount of the anionic emulsifier is 1. 0 part or more relative to 100 parts by weight of a total amount of a monomer component used for producing the emulsion.

2. The emulsion for vibration damping materials according to Claim 1, wherein the emulsion for vibration damping materials further comprises at least one anionic emulsifier selected from the group consisting of polyoxyethylene alkyl ether sulfates, alkyl diphenyl ether disulfonates, and alkenyl disuccinates, and a content of the anionic emulsifier is 1.0 part by weight or more relative to 100 parts by weight of a total amount of the monomer component used for producing the emulsion.

3. The emulsion for vibration damping materials according to Claim 1 or 2, wherein the anionic emulsifier is at least one selected from the group consisting of polyoxyethylene alkyl ether sulfates to which an ethylene oxide chain composed of 7 or more ethylene oxide units is added and alkyl diphenyl ether disulfonates.

4. A vibration damping composition comprising the emulsion for vibration damping materials of any of Claims 1 to 3.

5. A use method of the emulsion for vibration damping materials of Claim 4, wherein the vibration damping composition is used as an aqueous vibration damping material.

6. A coating method of the vibration damping composition of Claim 4, wherein the vibration damping composition is coated so as to have a face weight of 2.0 to 6.0 kg/m$^2$ after drying, and dried.

7. A vibration damping material obtainable by the coating method of the vibration damping composition of Claim 4.

## INTERNATIONAL SEARCH REPORT

| | International application No. |
|---|---|
| | PCT/JP2006/316430 |

A. CLASSIFICATION OF SUBJECT MATTER
*C09K3/00*(2006.01)i, *C08F2/26*(2006.01)i, *F16F15/02*(2006.01)i

According to International Patent Classification (IPC) or to both national classification and IPC

B. FIELDS SEARCHED

Minimum documentation searched (classification system followed by classification symbols)
C09K3/00, C08F2/26, F16F15/02, C09D1/00-10/00, C09D101/00-201/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2005-105133 A (Nippon Shokubai Co., Ltd.), 21 April, 2005 (21.04.05), Full text; particularly, Par. Nos. [0068] to [0073] & CN 1624015 A   & EP 1520865 A2 & KR 2005-0031917 A   & US 2005-101697 A1 | 1-7 |
| X | JP 2005-105106 A (Nippon Shokubai Co., Ltd.), 21 April, 2005 (21.04.05), Full text; particularly, Par. Nos. [0071] to [0076] (Family: none) | 1-7 |

| ☒ Further documents are listed in the continuation of Box C. | ☐ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 November, 2006 (24.11.06) | 05 December, 2006 (05.12.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2006/316430 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | JP 2004-115665 A  (Nippon Shokubai Co., Ltd.), 15 April, 2004 (15.04.04), Full text; particularly, Par. Nos. [0051] to [0064] (Family: none) | 1-7 |
| A | JP 2005-187605 A  (Dainippon Ink And Chemicals, Inc.), 14 July, 2005 (14.07.05), (Family: none) | 1-7 |
| A | JP 2005-60712 A  (Mitsubishi Rayon Co., Ltd.), 10 March, 2005 (10.03.05), & EP 1162217 A1          & US 2001-016612 A1 & WO 0001748 A1 | 1-7 |

Form PCT/ISA/210 (continuation of second sheet) (April 2005)

**EP 1 930 390 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004137485 A